# EUROPÄISCHE PATENTSCHRIFT

(11) **EP 3 048 402 B1**
(45) Veröffentlichungstag und Bekanntmachung des Hinweises auf die Patenterteilung: **15.11.2017**
(21) Anmeldenummer: 15151976.6
(22) Anmeldetag: 21.01.2015
(51) Int. Cl.: F27B 9/24, C03B 35/16, F27B 9/30, F27D 3/02, B08B 9/00, F16C 35/06, F27B 3/10, F27D 25/00

(54) **Tragrollenwechselvorrichtung**
Support roller exchange device
Dispositif de changement de rouleau porteur

(30) Priorität: 20.01.2015 EP 15151782
(43) Veröffentlichungstag der Anmeldung: 27.07.2016
(73) Patentinhaber: LOI Thermprocess GmbH, 45141 Essen (DE)
(72) Erfinder: Balster, Frank, 48301 Nottuln (DE); Wachholder, Horst, 45277 Essen (DE)
(74) Vertreter: Zenz Patentanwälte Partnerschaft mbB

(56) Entgegenhaltungen:
- EP-A1- 0 033 845
- DE-A1-102011 079 771
- KR-A- 20030 053 400

## Beschreibung

Die vorliegende Erfindung richtet sich auf eine Tragrollenwechselvorrichtung zum Wechseln einer Tragrolle eines Rollenherdofens, aufweisend ein gegenüber der äußeren Umgebungsatmosphäre abdichtbares Gehäuse, das an seiner Vorderseite eine an den Rollenherdofen ankoppelbare Schleuse aufweist, über die ein Zugang unter Ausschluss der Umgebungsatmosphäre auf eine zu demontierende Tragrolle des Rollenherdofens vom Inneren des Gehäuses aus möglich ist, und wenigstens eine zum Demontieren und Montieren von Tragrollen ausgebildete Tragrollenhandhabungsvorrichtung, die in dem Gehäuse verfahrbar angeordnet ist und die zumindest teilweise durch die Schleuse hindurch aus dem Gehäuse ausfahrbar ausgebildet ist.

Eine Tragrollenwechselvorrichtung der Eingangs bezeichneten Art ist zum Beispiel aus der DE 10 2011 079 771 A1 bekannt. Diese Tragrollenwechselvorrichtung ist seitlich neben dem Rollenherdofen verfahrbar und weist eine eingehauste, d.h. in einem Gehäuse untergebrachte Tragrollenhandhabungsvorrichtung auf. Diese bekannte Tragrollenwechselvorrichtung wird mit einer Bühne entlang einer Ofenlängsachse an der entsprechenden Wechsellage zum Tragrollenwechsel positioniert und an den Rollenherdofen herangefahren. Dann fährt bei einem Wechsel einer Tragrolle eine Lanze der Tragrollenhandhabungsvorrichtung in die hohle Tragrolle ein und hebt die auszutauschende Tragrolle an, wobei die Lanze dann die Tragrolle mitsamt eines am Längsende der Tragrolle angebrachten Isolationsstopfens aus einer in der Wandung des Rollenherdofens ausgebildeten Öffnung, in welcher die Tragrolle im Betrieb drehbar gelagert ist, herauszieht.

Wenn die verfahrbare Bühne auf zwei unterschiedlich abgestützten Schienen steht, bei denen die eine Schiene an der Ofenbühne und die andere Schiene an der Hallenwand befestigt ist, kann dies von Nachteil sein. Denn dann können beide Schienen eine unterschiedliche Durchbiegung auf Ofenseite und Hallenseite aufweisen, was durch irgendeine Maßnahme zuerst festgestellt und dann ausgeglichen werden muss, damit beim Tragrollenwechsel sowohl die auszubauende Tragrolle aus dem Rollenherdofen als auch die einzubauende Tragrolle in den Rollenherdofen verfahren werden kann, ohne dass sich die jeweilige Tragrolle bei ihrer Bewegung in oder aus dem Rollenherdofen verkantet. Auch kann es sein, dass im Bereich einer auszutauschenden Tragrolle der Rollenherdofen nicht exakt waagerecht positioniert ist, so dass folglich die in diesem Bereich eingesetzte Tragrolle ebenfalls nicht waagerecht gelagert ist, so dass beim Tragrollenwechsel dies berücksichtigt werden muss, damit die zu demontierende Tragrolle und die zu montierende Tragrolle beim Wechsel nicht im Rollenherdofen verkanten. Neben diesem vertikalen Fluchtungsfehler bei geneigt eingebauter Tragrolle können auch horizontale Ungenauigkeiten vorliegen, wenn beispielsweise die Tragrolle schräg zur Ofenwand in dem Rollenherdofen eingebaut ist. Diese Fluchtungsfehler und Ungenauigkeiten stellen für die aus der DE 10 2011 079 771 A1 bekannten Tragrollenwechselvorrichtung ein großes Problem dar und können dazu führen, dass sich die auszubauende Tragrolle beim Wechsel verkantet.

Aus der KR 2003 0053400 A geht hervor, einen Austausch von Tragrollen eines Rollenherdofens mit einem vertikal auf- und absteigenden Heber vorzunehmen.

Aus der EP 0 033 845 A1 geht hervor, im Zuge eines Austauschs einer Tragrolle eines Rollenherddurchlaufofens die auszutauschende Tragrolle abzusenken oder benachbarte Tragrollen anzuheben.

Der Erfindung liegt daher die Aufgabe zugrunde eine Lösung zu schaffen, die auf konstruktiv einfache Weise eine Tragrollenwechselvorrichtung bereitstellt, bei welcher die aus dem Stand der Technik bekannten Nachteil vermieden werden und durch die ein Tragrollenwechsel möglich ist, ohne dass die auszubauende und die einzubauende Tragrolle sich bei ihrer Bewegung während der Demontage bzw. Montage im Rollenherdofen verkanten.

Bei einer Tragrollenwechselvorrichtung der Eingangs bezeichneten Art wird die Aufgabe erfindungsgemäß dadurch gelöst, dass die Tragrollenwechselvorrichtung ferner eine mit dem Gehäuse gekoppelte Höhenverstellvorrichtung aufweist, die das Gehäuse vertikal positionierend und das Gehäuse in einer horizontalen Ebene ausrichtend ausgebildet ist. Das Gehäuse ist folglich mit Hilfe der Höhenverstellvorrichtung in vertikaler Richtung auf unterschiedlichen Höhen positionierbar, wobei das Gehäuse zusätzlich noch für eine horizontale Ebene ausgerichtet werden kann. Gemäß der Erfindung muss das Gehäuse nicht zwingend exakt waagerecht ausgerichtet werden. Denn die horizontale Ebene kann auch eine zur Waagerechten geneigte Ebene sein.

Vorteilhafte und zweckmäßige Ausgestaltungen und Weiterbildungen der Erfindung ergeben sich aus den Unteransprüchen.

Durch die Erfindung wird eine Tragrollenwechselvorrichtung zum Wechseln einer Tragrolle eines Rollenherdofens zur Verfügung gestellt, die sich durch eine funktionsgerechte Konstruktion auszeichnet. Eine derartige Tragrollenwechselvorrichtung ist einfach und kostengünstig ausgebildet und gewährleistet, dass die Vorrichtung immer in Flucht zu der zu demontierenden Tragrolle angeordnet ist, wobei diese Position nicht immer zwingend eine waagerechte Position sein muss, sondern auch eine gegenüber der Waagerechten geneigte Position sein kann. Die Höhenverstellvorrichtung richtet die erfindungsgemäße Tragrollenwechselvorrichtung in einer horizontalen Ebene derart aus, dass die Tragrollenwechselvorrichtung fluchtend zu der zu demontierenden Tragrolle angeordnet ist, um ein Verkanten der auszutauschenden Tragrolle zu verhindern.

In Ausgestaltung der Tragrollenwechselvorrichtung gemäß der Erfindung ist vorgesehen, dass das Gehäuse auf einem verfahrbar ausgebildeten Trägerrahmen gelagert ist, der wenigstens zum Rollenherdofen hin und von diesem weg bewegbar ist. Dadurch ist ein modularer Aufbau der Tragrollenwechselvorrichtung gegeben, so dass unterschiedliche Gehäuse auf unterschiedlichen Trägerrahmen lagerbar sind. Folglich ist entweder der Trägerrahmen speziellen Erfordernissen angepasst oder aber das Gehäuse ist aufgrund besonderer Anforderungen speziell ausgebildet.

Konstruktiv besonders günstig ist es, wenn in Ausgestaltung der erfindungsgemäßen Tragrollenwechselvorrichtung die Höhenverstellvorrichtung an dem verfahrbar ausgebildeten Trägerrahmen befestigt ist und den Trägerrahmen derart abstützt, dass der Trägerrahmen zusammen mit dem darauf gelagerten Gehäuse mittels der Höhenverstellvorrichtung vertikal positionierbar und in einer horizontalen Ebene ausrichtbar ist.

Zur Ausrichtung des Gehäuses auf die auszuwechselnde Tragrolle ist es erforderlich, die aktuelle Ausrichtung des Gehäuses zu kennen und entsprechend der geforderten Ausrichtung gegebenenfalls anzupassen. Andererseits kann bei im wesentlich waagerecht verlaufendem Rollenherdofen zur Ausrichtung immer vorgesehen sein, das Gehäuse ebenfalls waagerecht zu positionieren. Zu diesem Zweck sieht die Erfindung in Ausgestaltung vor, dass die Höhenverstellvorrichtung wenigstens ein zur Ausrichtung des Gehäuses in einer horizontalen Ebene dienendes Neigungsmessgerät aufweist. Ein solches Neigungsmessgerät bestimmt dann beispielsweise die Neigung des Gehäuses in zwei Raumrichtungen, wobei es auch denkbar ist, dass mehrere Neigungsmessgeräte vorgesehen sind, die die Neigung in nur eine oder aber in alle drei Raumrichtungen bestimmt.

Neben der Höhenverstellung des Gehäuses und einer gegebenenfalls geneigten Ausrichtung des Gehäuses ist in Ausgestaltung der erfindungsgemäßen Tragrollenwechselvorrichtung vorgesehen, dass der Trägerrahmen das Gehäuse bewegbar abstützt, so dass das Gehäuse relativ zum Trägerrahmen verschwenkbar abgestützt ist. Sollte also eine auszuwechselnde Tragrolle schräg im Rollenherdofen gelagert sein oder sollte die Ausrichtung der Tragrollenwechselvorrichtung nicht fluchtend zu der auszutauschenden Tragrolle sein, kann das Gehäuse entsprechend verschwenkt werden, damit die Tragrollenwechselvorrichtung zu der auszutauschenden Tragrolle fluchtend angeordnet ist.

Die Erfindung sieht in weiterer Ausgestaltung vor, dass das Gehäuse mittels Gleitlagerelementen, die vorzugsweise aus einem eine Legierung auf Kupferbasis aufweisenden Werkstoff oder aus Polytetrafluorethylen (PTFE) gebildet sind, schwenkbar auf dem Trägerrahmen abgestützt ist. Die Gleitlagerelemente können zum Beispiel aus Rotguss bestehende Platten sein, die als Gleitflächen zwischen Gehäuse und Trägerrahmen angeordnet sind und auf denen sich das Gehäuse abstützt und relativ zu dem Trägerrahmen verschwenken lässt.

Eine Verschwenkung des Gehäuses relativ zum Trägerrahmen lässt sich auf konstruktiv einfache Weise dadurch realisieren, indem die Rückseite des Gehäuses über einen Schwenkantrieb mit dem Trägerrahmen bewegungsgekoppelt verbunden ist, wobei das Gehäuse mittels des Schwenkantriebs um einen an der Vorderseite des Gehäuses angeordneten Schwenkpunkt schwenkbar ist.

Eine sehr exakte und effiziente Verschwenkung des Gehäuses lässt sich über die Positionierung des Schwenkpunktes realisieren. Die Erfindung sieht diesbezüglich vor, dass der Schwenkpunkt vertikal versetzt zur Schleuse des Gehäuses angeordnet ist, wobei der Schwenkpunkt und die Schleuse ortsfest zueinander angeordnet sind.

Sollte die Tragrollenwechselvorrichtung noch nicht exakt genug vor der auszubauenden Tragrolle positioniert sein, besteht in weiterer Ausgestaltung der Erfindung eine Möglichkeit der seitlichen Positionierung noch darin, dass der Schwenkpunkt und der Trägerrahmen über einen Verschiebeantrieb bewegungsgekoppelt miteinander verbunden sind, wobei der Schwenkpunkt mittels des Verschiebeantriebs relativ zum Trägerrahmen bewegbar ist. Diese relative Bewegung des Schwenkpunktes zum Trägerrahmen kann auch dann zum Einsatz kommen, wenn durch eine Verschwenkung des Gehäuses die Tragrollenhandhabungsvorrichtung außer Flucht mit der Längsachse der zu wechselnden Tragrolle gekommen ist.

Die Höhenverstellvorrichtung kann als Seilzug oder dergleichen ausgebildet sein, welcher dafür sorgt, dass das Gehäuse angehoben oder abgesenkt werden kann, um auf die Höhe der auszubauenden Tragrolle eingestellt zu werden. Eine konstruktiv einfache und preisgünstige Möglichkeit besteht darin, dass die Höhenverstellvorrichtung wenigstens ein vorderes Hubelement umfasst, das im Bereich der Vorderseite des Gehäuses an dem Trägerrahmen befestigt ist. Auf diese Weise kann die Neigung und ggf. Höhe der Vorderseite des Gehäuses eingestellt werden.

Selbstverständlich ist in weiterer Ausgestaltung der Erfindung vorgesehen, dass die Höhenverstellvorrichtung wenigstens ein hinteres Hubelement umfasst, das im Bereich der Rückseite des Gehäuses an dem Trägerrahmen befestigt ist.

Mit Hilfe von vorderem und hinterem Hubelement kann dann das Gehäuse insgesamt in seiner Höhe verfahren werden und auf die Höhe der auszubauenden Tragrolle eingestellt werden, wobei das vordere und hintere Hubelement separat verfahrbar ist, so dass auch eine Neigung des Gehäuses eingestellt oder kompensiert werden kann.

Schließlich sieht die Erfindung eine Anordnung vor, die einen Rollenherdofen zum Wärmebehandeln von Bauteilen und eine zum Wechseln einer Tragrolle des Rollenherdofens ausgebildete Tragrollenwechselvorrichtung gemäß einem der Ansprüche 1 bis 11 aufweist.

Wie vorstehend bereits ausgeführt, ist mit der Ausdrucksweise "Ausrichtung in einer horizontalen Ebene" nicht nur eine waagerechte Ausrichtung des Gehäuses gemeint. Vielmehr umfasst diese Ausdrucksweise neben der waagerechten Ausrichtung auch eine geneigte Ausrichtung des Gehäuses.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in schematischer Draufsicht einen Rollenherdofen mit einer erfindungsgemäßen Tragrollenwechselvorrichtung, die seitlich am Rollenherdofen verfahrbar ausgebildet ist,
Figur 2 die erfindungsgemäße Tragrollenwechselvorrichtung in perspektivischer Ansicht,
Figur 3 eine Unteransicht der Tragrollenwechselvorrichtung und eine vergrößerte Darstellung auf eine Antriebseinheit der Tragrollenwechselvorrichtung,
Figur 4 die Tragrollenwechselvorrichtung mit ihrem Gehäuse und ihrem Trägerrahmen in Einzelteildarstellung,
Figur 5 eine perspektivische Ansicht auf die Unterseite des Gehäuses und auf den Trägerrahmen,
Figur 6 eine seitliche Ansicht des Trägerrahmes vor dem Heranfahren der Tragrollenwechselvorrichtung an den Rollenherdofen,
Figur 7 eine seitliche Ansicht des Trägerrahmes bei dem Heranfahren der Tragrollenwechselvorrichtung an den Rollenherdofen,
Figur 8 eine vergrößerte Ansicht auf einen am Trägerrahmen befestigten Schwenkantrieb,
Figur 9 eine vergrößerte Ansicht auf einen am Trägerrahmen befestigten Verschiebeantrieb (Sicht von unten),
Figur 10 eine schematische Ansicht auf die Tragrollenwechselvorrichtung in einer Grundposition,
Figur 11 eine schematische Ansicht auf die Tragrollenwechselvorrichtung in einer Position, in welcher das Gehäuse verschwenkt ist, und
Figur 12 eine schematische Ansicht auf die Tragrollenwechselvorrichtung in einer Position, in welcher das Gehäuse verschwenkt und ein Schwenkpunkt seitlich bewegt ist.

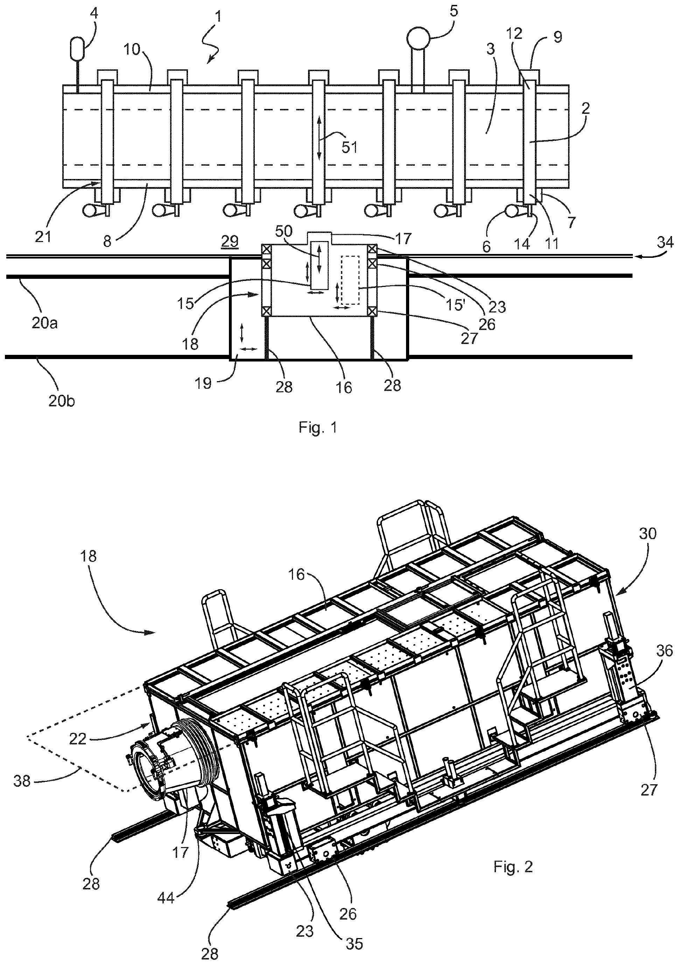

In Figur 1 ist in schematischer Draufsicht ein Rollenherdofen 1 gezeigt, bei dem die jeweiligen Tragrollen 2 an ihren Längsenden 11, 12 mittels eines jeweiligen Lagerungssystems drehbar gelagert sind. In dem in Figur 1 gezeigten Ausführungsbeispiel ist der Rollenherdofen 1 zum kontinuierlichen Wärmebehandeln von Stahlbändern 3 ausgebildet. Figur 1 ist eine exemplarische Darstellung und zeigt lediglich einen Ausschnitt des Rollenherdofens 1. Für diesen Ausschnitt weist der Rollenherdofen 1 sieben Tragrollen 2 auf, wobei aus Gründen der Übersichtlichkeit nur eine der sieben Tragrollen 2 mit Bezugszeichen versehen ist. Der Rollenherdofen 1 ist gegenüber seiner Umgebung hermetisch abgeschlossen und wird unter einer Schutzgasatmosphäre betrieben. Die Tragrollen 2 sind entlang der Längsachse des Rollenherdofens 1 angeordnet und transportieren das mit Wärme zu behandelnde Stahlband 3, wobei der Prozess bei Temperaturen von über 1000°C im Inneren des Rollenherdofens 1 stattfindet. Eine Heizvorrichtung 4 sorgt für die für den Prozess erforderliche Temperatur im Inneren des Rollenherdofens 1, wohingegen eine Schutzgasvorrichtung 5 dafür verantwortlich ist, dass sich im Inneren des Rollenherdofens 1 die gewünschte Schutzgasatmosphäre einstellt. Jede Tragrolle 2 ist außerhalb des Rollenherdofens 1 mit einer Antriebseinheit 6 verbunden, welche die jeweilige Tragrolle 2 rotierend antreibt, um das Stahlband 3 durch den Rollenherdofen 1 zu fördern. Das in den Figuren nicht im Detail dargestellte Lagerungssystems einer jeweiligen Tragrolle 2 umfasst ein erstes Lagerelement 7, welches auf einer ersten Seitenwand 8 des Rollenherdofens 1 angebracht ist und bei einem Tragrollenwechsel von der ersten Seitenwand 8 gelöst werden muss, und ein zweites Lagerelement 9, welches auf einer der ersten Seitenwand 8 gegenüberliegenden, zweiten Seitenwand 10 des Rollenherdofens 1 angebracht ist und bei einem Tragrollenwechsel von der zweiten Seitenwand 10 nicht gelöst werden muss, sondern dort zur Lagerung der neu einzusetzenden Tragrolle 2 verbleibt. Bei dem Lagerungssystem ist eine jeweilige Tragrolle 2 mit ihrem ersten Längsende 11 mittels des ersten Lagerelements 7 und mit ihrem zweiten Längsende 12 mittels des zweiten Lagerelements 9 drehbar im Rollenherdofen 1 gelagert, wobei das erste Lagerelement 7 mit Isolierstopfen und das zweite Lagerelement 9 mit Isolierstopfen derart gasdicht ausgebildet sind, dass während des Ofenbetriebs kein Schutzgas aus dem Inneren des Rollenherdofens 1 entweichen kann. Von dem ersten Längsende 11 einer jeweiligen Tragrolle 2 aus erstreckt sich ein Wellenzapfen 14, der aus einem jeweiligen ersten Lagerelement 7 nach außen hin hervorsteht und mit einer zugeordneten Antriebseinheit 6 antriebsverbunden ist, durch die eine jeweilige Tragrolle 2 im Betrieb des Rollenherdofens 1 gedreht wird. Bei einem Wechsel einer Tragrolle 2 wird zunächst die Antriebseinheit 6 von dem Wellenzapfen 14 gelöst, bevor dann die zu demontierende Tragrolle 2 mitsamt dem ersten Lagerelement 7 mit Isolierstopfen vom Rollenherdofen 1 entfernt wird, wohingegen das zweite Lagerelement 9 am Rollenherdofen 1 verbleibt und eine neu eingesetzte Tragrolle 2 drehbar lagert.

Wie Figur 1 ferner schematisch zeigt, ist seitlich vom Rollenherdofen 1 eine in Figur 2 in perspektivischer Ansicht dargestellte Tragrollenwechselvorrichtung 18 zum Wechseln einer Tragrolle 2 des Rollenherdofens 1 angeordnet. Die Tragrollenwechselvorrichtung 18 ist auf einer Fahrbühne 19 verfahrbar positioniert und wird mit Hilfe der Fahrbühne 19 seitlich entlang des Rollenherdofens 1 verfahren, um vor der Tragrolle 2 positioniert zu werden, die ausgetauscht werden soll. Die Fahrbühne 19 selbst ist auf Schienen 20a, 20b seitlich zum Rollenherdofen 1 entlang dessen erster Seitenwand 8 verfahrbar gelagert, wobei die Tragrollenwechselvorrichtung 18 auf der Fahrbühne 19 zur Seitenwand 8 des Rollenherdofens 1 hin und von dieser weg verfahrbar ausgebildet ist. Zum Tragrollenwechsel wird das erste Lagerelement 7 mit Isolierstopfen von der ersten Seitenwand 8 gelöst und die auszuwechselnde Tragrolle 2 mitsamt dem ersten Lagerelement 7 mit Isolierstopfen mit Hilfe einer Tragrollenhandhabungsvorrichtung 15 der Tragrollenwechselvorrichtung 18 aus dem Rollenherdofen 1 gezogen. Die Tragrollenwechselvorrichtung 18 umfasst neben der Tragrollenhandhabungsvorrichtung 15 ein gegenüber der äußeren Umgebungsatmosphäre abdichtbares Gehäuse 16, das eine zum Ankoppeln an den Rollenherdofen 1 dienende Schleuse 17 aufweist, über die ein Zugang unter Ausschluss der Umgebungsatmosphäre auf eine zu demontierende Tragrolle 2 von dem Gehäuse 16 aus möglich ist. Die Tragrollenhandhabungsvorrichtung 15 ist in dem Gehäuse derart verfahrbar angeordnet, dass sie zu der Seitenwand 8 hin und von dieser weg sowie seitlich zur Seitenwand 8 bewegbar ist. Dabei kann eine einzige Tragrollenhandhabungsvorrichtung 15 sowohl zur Demontage einer Tragrolle 2 vom Rollenherdofen 1 als auch zur Montage einer neuen Tragrolle 2 in den Rollenherdofen 1 eingesetzt werden. Denkbar ist es auch, dass eine Tragrollenhandhabungsvorrichtung 15 zur Demontage eingesetzt wird und anschließend vom Ofen wegbewegt wird, wonach zur Montage eine weitere Tragrollenhandhabungsvorrichtung 15' verwendet wird, die mit einer zu montierenden Tragrolle 2 bestückt ist, was in Figur 1 schematisch angedeutet ist. Dabei sind die beiden Tragrollenhandhabungsvorrichtungen 15 und 15' innerhalb des gasdichten Gehäuses 16 verfahrbar, vor der Schleuse 17 positionierbar sowie zumindest teilweise durch die Schleuse 17 hindurch aus dem Gehäuse 16 ausfahrbar. Ein solcher Tragrollenwechsel kann somit mit einer oder zwei Tragrollenhandhabungsvorrichtungen 15, 15' erfolgen, wobei der Rollenherdofen 1 vor dem Tragrollenwechsel auf ca. 800°C abgekühlt und mit Stickstoff gespült wird.

Um den Wechsel einer Tragrolle zeitlich kurz zu halten und damit die Stillstandzeit zu minimieren, wird der Tragrollenwechsel seitlich des Rollenherdofens 1 durchgeführt, wobei der Betrieb der Tragrollenhandhabungsvorrichtung 15, 15' gegenüber der äußeren Umgebungsatmosphäre abgeschirmt erfolgt. Dementsprechend wird die eine oder werden die beiden Tragrollenhandhabungsvorrichtungen 15, 15' in dem gegenüber der äußeren Umgebungsatmosphäre abgedichteten Gehäuse 16 betrieben. In einem solchen Gehäuse 16 sind dann die eine einzige oder die beiden Tragrollenhandhabungsvorrichtungen 15, 15' verfahrbar angeordnet und untergebracht. Bei einem Tragrollenwechsel mit einem solchen gasdichten Gehäuse 16, welches gegenüber der äußeren Umgebung hermetisch abgedichtet ist, wird vor dem eigentlichen Tragerollenwechsel die Antriebseinheit 6 von dem Wellenzapfen 14 der Tragrolle 2 entfernt. Durch die Schleuse 17 ist das Gehäuse 16 abgedichtet gegenüber der äußeren Atmosphäre bzw. Umgebung an den Rollenherdofen 1 andockbar bzw. ankoppelbar. Dabei umschließt die Schleuse 17 das erste Lagerelement 7 mit Isolierstopfen, welches zusammen mit der zu demontierenden Tragrolle 2 aus dem Rollenherdofen 1 dann herausgezogen wird. Erst kurz vor dem Herausziehen des ersten Lagerelements 7 mit Isolierstopfen, jedoch nach dem Andocken der Schleuse 17 an den Rollenherdofen 1 und dem Umschließen des ersten Lagerelements 7 mit Isolierstopfen, wird die Gasdichtheit des ersten Lagerelements 7 mit Isolierstopfen aufgehoben. Somit ist die eine oder sind die beiden Tragrollenhandhabungsvorrichtungen 15, 15' in dem gegenüber der äußeren Umgebung abgedichteten Gehäuse 16 verfahrbar angeordnet und wenigstens zum Teil durch die Schleuse 17 in der Wandung des Gehäuses 16 aus diesem ausfahrbar, um Zugriff auf die zu demontierende Tragrolle 2 zu haben. Nach dem Andocken bzw. Ankoppeln des Gehäuses 16 an dem Rollenherdofen 1 wird in dem Gehäuse 16 selbst auch eine Schutzgasatmosphäre eingestellt, die der Schutzgasatmosphäre des Inneren des Rollenherdofens 1 entspricht. Bei Unterbringung in dem Gehäuse 16 kann die Tragrollenhandhabungsvorrichtung 15 oder können die beiden Tragrollenhandhabungsvorrichtungen 15, 15' innerhalb des Gehäuses 16 wenigstens in zwei Raumrichtungen verfahrbar sein, was durch die Pfeile in Figur 1 angedeutet ist. Zusätzlich ist die Tragrollenwechselvorrichtung 18 bzw. das Gehäuse 16 in wenigstens zwei Raumrichtungen verfahrbar, um seitlich an die gewünschte Tragrolle 2 heranzufahren und um zum Andocken sich der ersten Seitenwand 8 zu nähern.

Die auszuwechselnde Tragrolle 2 wird beim Tragrollenwechsel aus einer Öffnung 21 (siehe Figur 1) aus der ersten Seitenwand 8 des Rollenherdofens 1 herausgezogen. Beim Herausziehen der auszutauschenden Tragrolle 2 und auch beim Einbau einer neuen Tragrolle 2 muss gewährleistet sein, dass die handzuhabende Tragrolle 2, d.h. die Tragrolle, die aus- oder einzubauen ist, geradlinig aus der oder in die Öffnung 21 bewegt wird, um ein Verkanten der bewegten Tragrolle 2 in der Öffnung 21 zu verhindern und sicherzustellen, dass die Tragrolle 2 beim Ausbau geradlinig aus dem zweiten Lagerelement 9 herausgezogen wird und beim Einbau in das zweite Lagerelement 9 hinein gedrückt wird.

Die verschiedenen Funktionalitäten der erfindungsgemäßen Tragrollenwechselvorrichtung 18 werden bei Betrachtung der einzelnen Vorgänge beim Ausbau einer Tragrolle 2 verständlich. Wie vorstehend bereits angesprochen, ist die Tragrollenwechselvorrichtung 18 auf einer Fahrbühne 19 angeordnet. Die Fahrbühne 19 selbst ist auf Schienen 20a und 20b, die parallel zum Rollenherdofen 1 verlaufen, seitlich neben dem Rollenherdofen 1 verfahrbar, so dass für einen Tragrollenwechsel zunächst die Fahrbühne 19 seitlich soweit neben dem Rollenherdofen 1 verfahren wird, bis die Fahrbühne 19 vor der zu wechselnden Tragrolle 2 angeordnet ist. Dabei kann die Schiene 20a eine Schiene an der Ofenbühne 29 und die Schiene 20b eine Schiene an der Hallenwand sein. Wenn durch das Verfahren der Fahrbühne 19 die seitliche Position zu der auszuwechselnden Tragrolle 2 erreicht ist, dann wird die Tragrollenwechselvorrichtung 18 in Richtung der ersten Seitenwand 8 des Rollenherdofens 1 bewegt.

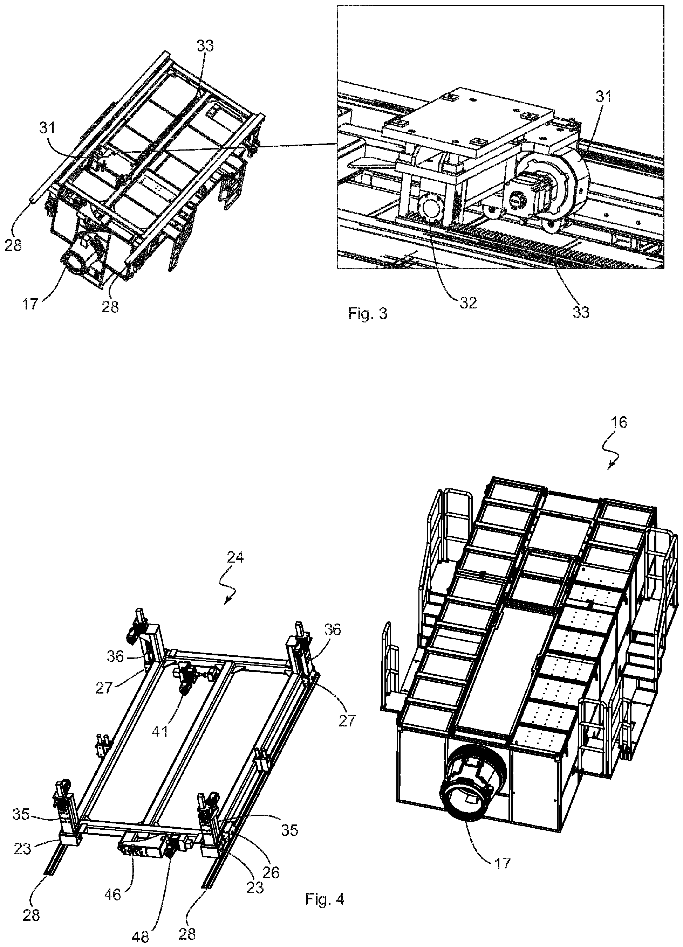

Zu diesem Zweck ist die Tragrollenwechselvorrichtung 18 auf mehreren Radpaaren gelagert, was mit Bezug auf die Figuren 1 bis 12 nachstehend beschrieben wird. Das Gehäuse 16 der Tragrollenwechselvorrichtung 18 ist auf einem verfahrbar ausgebildeten Trägerrahmen 24 gelagert. Der Trägerrahmen 24 ist beispielsweise aus der Einzelteildarstellung der Figuren 4 und 5 bis 7 ersichtlich und umfasst neben einem Rahmengestell 25 ein vorderes Radpaar 23, ein mittleres Radpaar 26 und ein hinteres Radpaar 27. Die Radpaare 26, 27 können sich auf Führungsschienen 28 (siehe zum Beispiel Figur 1) bewegen, die auf der Fahrbühne 19 angebracht sind und die quer zum Rollenherdofen 1 verlaufen bzw. ausgerichtet sind. Beim Tragrollenwechsel ist die Tragrollenwechselvorrichtung 18 bzw. der Trägerrahmen 24 zunächst auf den hinteren Radpaaren 27 und den mittleren Radpaaren 26 abgestützt. Dabei wird die Tragrollenwechselvorrichtung 18 solange in Richtung des Rollenherdofens 1 bewegt, bis das mittlere Radpaar 26 das Ende der Führungsschienen 28 erreicht. Für die Bewegung zum Rollenherdofen 1 hin und von diesem weg ist eine in Figur 3 gezeigte Antriebseinrichtung 31 vorgesehen. Die Antriebseinrichtung 31 treibt ein Zahnrad 32 an, welches in die Zähne einer an der Fahrbühne 19 befestigten Zahnstange 33 eingreift, so dass die Tragrollenwechselvorrichtung 18 entlang der Zahnstange 33 zum Rollenherdofen 1 hin und von diesem weg bewegbar ist (siehe zum Beispiel Figur 3).

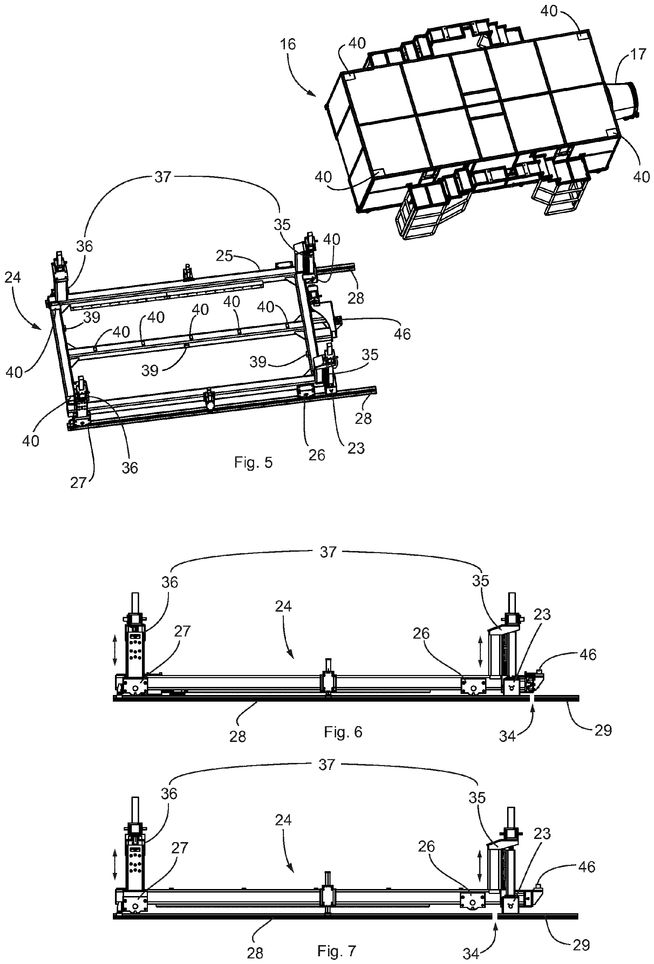

Zur Überwindung eines Spalts 34 zwischen der Fahrbühne 19 und der Ofenbühne 29 erfolgt bei Erreichen des Endes der Führungsschienen 28 ein Wechsel der Abstützung, bei welchem die Tragrollenwechselvorrichtung 18 nun nicht mehr von dem mittleren Radpaar 26 sondern von dem vorderen Radpaar 23 zusammen mit dem hinteren Radpaar 27 abgestützt ist. In Figur 6 ist die Situation gezeigt, in welcher die Tragrollenwechselvorrichtung 18 von dem mittleren Radpaar 26 und dem hinteren Radpaar 27 ausschließlich auf der Fahrbühne 19 abgestützt ist, wohingegen Figur 7 die Situation nach dem vorstehend angesprochenen Wechsel zeigt, bei der die Tragrollenwechselvorrichtung 18 von dem vorderen Radpaar 23 und dem hinteren Radpaar 27 und folglich nicht mehr länger von dem mittleren Radpaar 26 abgestützt ist.

Für diesen Wechsel ist ein jeweiliges Rad des vorderen Radpaares 23 an einem jeweiligen vorderen Hubelement 35 gelagert, wobei die beiden vorderen Hubelemente 35 in dem dargestellten Ausführungsbeispiel als Spindelhubelemente ausgeführt sind und eine lineare Verschiebung des vorderen Radpaares 23 zum Trägerrahmen 24 in vertikaler Richtung (also nach oben oder unten) ermöglichen, wodurch sich letztlich die Höhe ändert, in welcher das Gehäuse 16 angeordnet ist. Dementsprechend ist das vordere Radpaar 23 relativ zum Trägerrahmen 24 in vertikaler Richtung bewegbar, wohingegen das mittlere Radpaar 26 ortsfest an dem Trägerrahmen 24 gelagert ist. In Figur 6 ist das vordere Radpaar 23 in einer Ruheposition angeordnet, in welcher das mittlere Radpaar 26 zusammen mit dem hinteren Radpaar 27 die Tragrollenwechselvorrichtung 18 auf den Führungsschienen 28 abstützt.

Mit Hilfe der vorderen Hubelemente 35 erfolgt die Überwindung des Spalts 34, denn das vordere Radpaar 23 wird erst dann von dem vorderen Hubelement 35 abgesenkt, wenn unterhalb des vorderen Radpaares 23 die Ofenbühne 29 angeordnet ist bzw. wenn das mittlere Radpaar 26 bis ans Ende der Führungsschienen 28 bewegt ist. Zusätzlich dienen die vorderen Hubelemente 35 dazu, die Tragrollenwechselvorrichtung 18 zur auszubauenden Tragrolle 2 hin auszurichten, so dass die zu wechselnde Tragrolle 2 ohne ein Verkanten aus dem Rollenherdofen 1 herausgezogen werden kann. Um die Tragrollenwechselvorrichtung 18 insgesamt auf die Einbauhöhe der auszuwechselnden Tragrolle 2 zu positionieren, sind auch die den Trägerrahmen 24 abstützenden Räder des hinteren Radpaares 27 an jeweiligen hinteren Hubelementen 36 gelagert, die ebenfalls als Spindelhubelemente ausgebildet sind. Mit Hilfe der vorderen und hinteren Hubelemente 35 und 36 kann der das Gehäuse 16 tragende Trägerrahmen 24 in seiner Höhe verfahren werden und auf die Höhe der auszubauenden Tragrolle 2 eingestellt werden, wobei die vorderen und hinteren Hubelemente 35, 36 separat verfahrbar sind, so dass auch eine Neigung des Gehäuses 16 eingestellt oder kompensiert werden kann. Die vorderen Hubelemente 35, die unabhängig voneinander verstellbar sind und die im Bereich der Vorderseite 22 des Gehäuses 16 an dem Trägerrahmen 24 befestigt sind, und die hinteren Hubelemente 36, die unabhängig voneinander verstellbar sind und die im Bereich der Rückseite 30 des Gehäuses 16 an dem Trägerrahmen 24 befestigt sind, gehören zu einer Höhenverstellvorrichtung 37, die mit dem Gehäuse 16 gekoppelt ist und die darüber hinaus das Gehäuse 16 vertikal positioniert und das Gehäuse 16 in einer horizontalen Ebene 38 (siehe Figur 2) ausrichtet. Dabei kann die horizontale Ebene 38 eine waagerechte Ebene oder eine zur Waaagerechten geneigte Ebene sein, was davon abhängig ist, ob die auszubauende Tragrolle 2 waagerecht oder geneigt im Rollenherdofen 1 eingebaut ist.

Um ein Verkanten der handzuhabenden Tragrolle 2 bei deren Ein- oder Ausbau zu verhindern, ist es in einem ersten Schritt des Tragrollenwechsels demnach notwendig, dass die an der Vorderseite 22 des Gehäuses 16 ausgebildete Schleuse 17 eine vertikale Position einnimmt, in welcher sie das erste Lagerelement 7 überdeckt. Zu diesem Zweck werden die vorderen und hinteren Hubelemente 35 und 36 entsprechend angesteuert und verändern damit die relative Position des auf dem Trägerrahmen 24 abgestützten Gehäuses 16 zu den vorderen und hinteren Radpaaren 23 und 27, wobei alle vier Hubelemente 35 und 36 separat voneinander verfahrbar sind, um jedwede Neigung des Gehäuses 16 auszugleichen oder einzustellen, damit die Tragrollenhandhabungsvorrichtung 15 die entsprechende Tragrolle 2 ohne ein Verkanten aus dem Rollenherdofen 1 herausziehen kann. Mit anderen Worten ist die Höhenverstellvorrichtung 37 an dem verfahrbar ausgebildeten Trägerrahmen 24 befestigt und stützt den Trägerrahmen 24 derart ab, dass der Trägerrahmen 24 zusammen mit dem darauf gelagerten Gehäuse 16 mittels der Höhenverstellvorrichtung 37 in Bezug auf die auszubauende Tragrolle 2 vertikal positionierbar und in einer horizontalen Ebene 38 ausrichtbar ist. Zur Unterstützung einer solchen vertikalen Positionierung und horizontalen Ausrichtung weist die Höhenverstellvorrichtung 37 mehrere Neigungsmessgeräte 39 (siehe zum Beispiel Figur 5) auf, wobei auch nur ein einziges Neigungsmessgerät 39 ausreichen würde, wenn dieses die Neigung in alle drei Raumrichtungen bestimmen kann. In dem dargestellten Ausführungsbeispiel werden mehrere zweidimensionale Neigungsmessgeräte 39 verwendet, die an dem Trägerrahmen 24 angebracht sind und die dazu dienen, das Gehäuse 16 in einer horizontalen Ebene 38 auszurichten. Dabei überprüfen die Neigungsmessgeräte 39 die aktuelle Ausrichtung des Gehäuses 16, also auch eine sich ändernde Ausrichtung bei Betätigung der Hubelemente 35, 36. Dementsprechend überwachen die Neigungsmessgeräte 39 in allen Achsen bzw. Raumrichtungen die Ausrichtung des gesamten Trägerrahmens 24, wobei die Anpassung von Neigung und Ausrichtung in vertikaler Richtung durch die Höhenverstellvorrichtung 37 mit ihren Hubelementen 35, 36 erfolgt. Somit sorgen die vier Hubelemente 35, 36 für die Höhenausrichtung des Trägerrahmens 24, wobei die Hubelemente 35, 36 einzeln oder als Gruppe gefahren werden können.

Die Ausrichtung der Tragrollenwechselvorrichtung 18 entsprechend einer horizontalen Ebene 38 in Bezug auf die auszutauschende Tragrolle 2 garantiert allein aber noch nicht, dass die Tragrolle 2 auch tatsächlich beim Ausbau nicht verkantet. Denn es ist möglich, dass die Tragrolle 2 zwar nicht geneigt sondern schräg im Rollenherdofen 1 eingesetzt ist oder dass die Tragrollenwechselvorrichtung 18 nicht genau fluchtend zu der auszubauenden Tragrolle 2 positioniert ist. Daher stützt bei der erfindungsgemäßen Tragrollenwechselvorrichtung 18 der Trägerrahmen 24 das Gehäuse 16 derart bewegbar ab, dass das Gehäuse 16 relativ zum Trägerrahmen 24 verschwenkbar abgestützt ist. Damit das Gehäuse 16 auch relativ zum Trägerrahmen 24 verschwenkbar ist, sind Gleitlagerelemente 40 vorgesehen, die sowohl an dem Rahmengestell 25 des Trägerrahmens 24 als auch an der Unterseite des Gehäuses 16 angebracht sind, wie es zum Beispiel in Figur 5 gezeigt ist. Die Gleitlagerelemente 40 sind folglich zwischen Gehäuse 16 und Trägerrahmen 24 angeordnet, so dass das Gehäuse 16 nicht direkt auf dem Trägerrahmen 24 aufliegt. Die Gleitlagerelemente 40 bestehen aus einem Werkstoff, der eine Legierung auf Kupferbasis aufweist. Bei dem Ausführungsbeispiel bestehen die Gleitlagerelemente 40 aus Rotguss, wobei selbstverständlich alternative Werkstoffe oder alternative Möglichkeiten für eine schwenkbare Abstützung des Gehäuses 16 auf dem Trägerrahmen 24 denkbar sind. Denkbar wäre auch ein Verschwenken ohne Gleitlagerelemente 40, wobei aber die Gleitlagerelemente 40 für ein ruckfreies Ausrichten des Gehäuses 16 sorgen. Die plattenförmigen Gleitlagerelemente 40 sind in dem dargestellten Ausführungsbeispiel auf der Unterseite des Gehäuses 16 in dessen Ecken und auf dem mittleren Träger des Trägerrahmens 24 montiert.

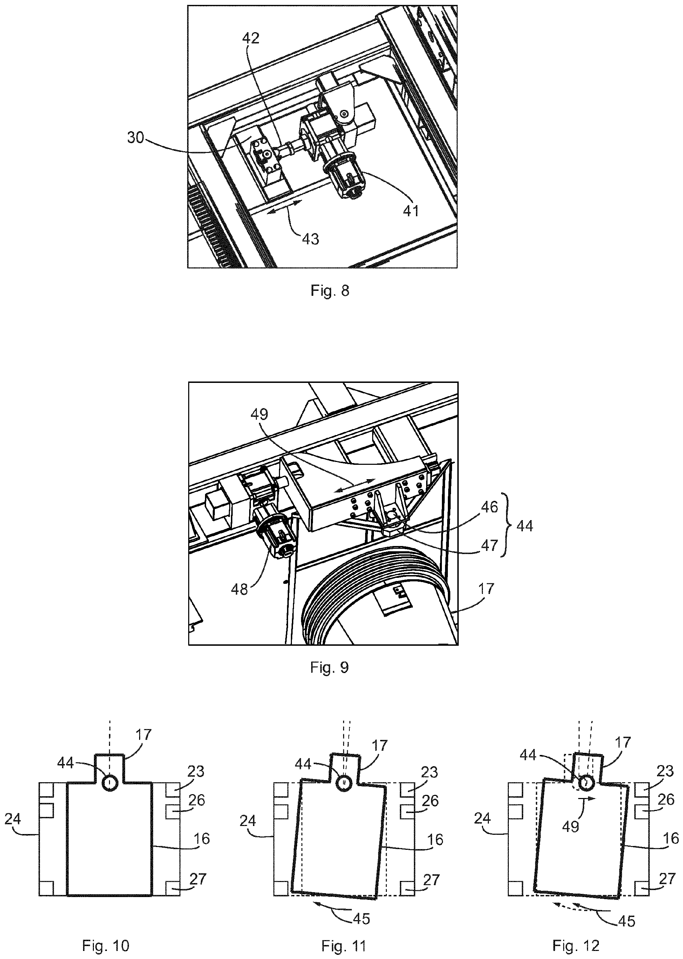

Die Abstützung des Gehäuses 16 über die Gleitlagerelemente 40 sorgt aber nicht für die relative Verschwenkung von Gehäuse 16 zum Trägerrahmen 24, sondern unterstützt und erleichtert lediglich diese Bewegung. Die Bewegung wird durch einen Schwenkantrieb 41 bewirkt, der an dem Trägerrahmen 24 ortsfest angebracht ist und eine Schubstange 42 antreibt, die an der Rückseite 30 des Gehäuses 16 angebracht ist (siehe zum Beispiel Figuren 4 und 8). Mit Hilfe dieses Schwenkantriebs 41 ist das Gehäuse 16 an dessen Rückseite 30 in Querrichtung 43 (siehe Pfeil in Figur 8) verschiebbar. Um nun das Gehäuse 16 mitsamt der Tragrollenhandhabungsvorrichtung 15 auf die auszubauende Tragrolle 2 auszurichten, kann das Gehäuse 16 aus der in Figur 10 gezeigten Grundstellung relativ zum Trägerrahmen 24 verschwenkt werden, wozu das Gehäuse 16 an seiner Vorderseite 22 einen Schwenkpunkt 44 aufweist, um den das Gehäuse 16 sich verschwenkt, wenn der Schwenkantrieb 41 die Rückseite 30 des Gehäuses 16 auslenkt, wie es exemplarisch in Figur 11 gezeigt und durch den Pfeil 45 angedeutet ist. Der Schwenkpunkt 44 ist durch einen Königsbolzen 46 auf Seiten des Trägerrahmens 24 und eine Königsbolzenaufnahme 47 auf Seiten des Gehäuses 16 definiert (siehe zum Beispiel Figur 9). Der Schwenkpunkt 44 ist vertikal versetzt zur Schleuse 17 des Gehäuses 16 angeordnet, wobei jedoch der Schwenkpunkt 44 und die Schleuse 17 ortsfest zueinander angeordnet sind. Folglich ist die Rückseite 30 des Gehäuses 16 über den Schwenkantrieb 41 mit dem Trägerrahmen 24 bewegungsgekoppelt verbunden, so dass das Gehäuse 16 mittels des Schwenkantriebs 41 um den an der Vorderseite 22 des Gehäuses 16 angeordneten Schwenkpunkt 44 schwenkbar ist. Zur horizontalen Ausrichtung der Tragrollenhandhabungsvorrichtung 15 in Bezug auf die auszubauende Tragrolle 2 ist der Königsbolzen 46 vorgesehen, durch den infolge von Fluchtungsfehlern die Längsachse der auszubauenden Tragrolle 2 zu der Längsachse der Tragrollenhandhabungsvorrichtung 15 angepasst werden kann. Durch den Schwenkantrieb 41 wird das hintere Gehäuse 16 über den Königsbolzen 46 verschwenkt und somit die Längsachse der Tragrollenhandhabungsvorrichtung 15 zur Längsachse der auszubauenden Tragrolle 2 ausgerichtet.

Ein Verschwenken des Gehäuses 16 relativ zu dem Trägerrahmen 24 kann jedoch dazu führen, dass die für den Ausbau vorgesehene Tragrollenhandhabungsvorrichtung 15 und auch die Schleuse 17 nicht mehr exakt auf die auszubauende Tragrolle 2 ausgerichtet sind, denn zu diesem Zweck wurde eigentlich die Fahrbühne 19 vor dem Rollenherdofen 1 an der entsprechenden Stelle positioniert. Um diesem durch das Verschwenken hervorgerufenen Versatz zu begegnen, ist an der Vorderseite des Trägerrahmens 24 ein Verschiebeantrieb 48 befestigt, durch den der Königsbolzen 46 quer zum Trägerrahmen 24 bewegbar ist, wie durch den Pfeil 49 in Figur 9 und exemplarisch in Figur 12 gezeigt ist. Um einen möglichen seitlichen Versatz auszugleichen, sind folglich der Schwenkpunkt 44 und der Trägerrahmen 24 über einen Verschiebeantrieb 48 bewegungsgekoppelt miteinander verbunden, wobei der Schwenkpunkt 44 mittels des Verschiebeantriebs 48 relativ zum Trägerrahmen 24 bewegbar ist. Der Königsbolzen 46 ist auf einem Schlitten angeordnet, der an der Vorderseite des Trägerrahmens 24 mit Hilfe des Verschiebeantriebs 48 seitlich bewegbar ist

Zusammenfassend ist eine Tragrollenwechselvorrichtung 18 vorstehend beschrieben worden, die zum Tragrollenwechsel dient. Die Tragrollenwechselvorrichtung 18 umfasst das gegenüber der äußeren Umgebungsatmosphäre abdichtbare Gehäuse 16, das an seiner Vorderseite 22 die an den Rollenherdofen 1 ankoppelbare Schleuse 17 aufweist, über die ein Zugang unter Ausschluss der Umgebungsatmosphäre auf die zu demontierende Tragrolle 2 des Rollenherdofens 1 vom Inneren des Gehäuses 16 aus möglich ist, und wenigstens die eine zum Demontieren und Montieren von Tragrollen 2 ausgebildete Tragrollenhandhabungsvorrichtung 15, 15', die in dem Gehäuse 16 verfahrbar angeordnet ist und die zumindest teilweise durch die Schleuse 17 hindurch aus dem Gehäuse 16 ausfahrbar ausgebildet ist. Erfindungsgemäß weist die Tragrollenwechselvorrichtung 18 ferner die mit dem Gehäuse 16 gekoppelte Höhenverstellvorrichtung 37 auf, die das Gehäuse 16 vertikal positionierend und das Gehäuse 16 in einer horizontalen Ebene 38 ausrichtend ausgebildet ist. Die erfindungsgemäße Tragrollenwechselvorrichtung 18 ist Bestandteil einer Anordnung, die den Rollenherdofen 1 zum Wärmebehandeln von Bauteilen 3 und eben die zum Wechseln einer Tragrolle 2 des Rollenherdofens 1 ausgebildete Tragrollenwechselvorrichtung 18 aufweist. Die Tragrollenwechselvorrichtung 18 ist mit Hilfe der Höhenverstellvorrichtung 37 auf die Höhenposition der auszubauenden Tragrolle 2 verfahrbar (siehe Pfeile in den Figuren 6 und 7 neben den Hubelementen 35 und 36), wobei der Schwenkantrieb 41 und gegebenenfalls der Verschiebeantrieb 48 zusätzlich dafür sorgen, dass die Längsachse 50 der Tragrollenhandhabungsvorrichtung 15 fluchtend zu der Längsachse 51 der auszubauenden Tragrolle 2 ausgerichtet werden kann.

Die vorstehend beschriebene Erfindung ist selbstverständlich nicht auf die beschriebenen und dargestellten Ausführungsformen beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Tragrollenwechselvorrichtung (18) zum Wechseln einer Tragrolle (2) eines Rollenherdofens (1), aufweisend:
ein gegenüber der äußeren Umgebungsatmosphäre abdichtbares Gehäuse (16), das an seiner Vorderseite (22) eine an den Rollenherdofen (1) ankoppelbare Schleuse (17) aufweist, über die ein Zugang unter Ausschluss der Umgebungsatmosphäre auf eine zu demontierende Tragrolle (2) des Rollenherdofens (1) vom Inneren des Gehäuses (16) aus möglich ist, und
wenigstens eine zum Demontieren und Montieren von Tragrollen (2) ausgebildete Tragrollenhandhabungsvorrichtung (15, 15'), die in dem Gehäuse (16) verfahrbar angeordnet ist und die zumindest teilweise durch die Schleuse (17) hindurch aus dem Gehäuse (16) ausfahrbar ausgebildet ist,
**dadurch gekennzeichnet, dass**
die Tragrollenwechselvorrichtung (18) ferner eine mit dem Gehäuse (16) gekoppelte Höhenverstellvorrichtung (37) aufweist, die das Gehäuse (16) vertikal positionierend und zusätzlich das Gehäuse (16) für eine horizontale Ebene (38) ausrichtend ausgebildet ist, wobei die horizontale Ebene auch eine zur Waagerechten geneigte Ebene sein kann.

2. Tragrollenwechselvorrichtung (18) nach Anspruch 1, **dadurch gekennzeichnet, dass** das Gehäuse (16) auf einem verfahrbar ausgebildeten Trägerrahmen (24) gelagert ist, der wenigstens zum Rollenherdofen (1) hin und von diesem weg bewegbar ist.

3. Tragrollenwechselvorrichtung (18) nach Anspruch 2, **dadurch gekennzeichnet, dass** die Höhenverstellvorrichtung (37) an dem verfahrbar ausgebildeten Trägerrahmen (24) befestigt ist und den Trägerrahmen (24) derart abstützt, dass der Trägerrahmen (24) zusammen mit dem darauf gelagerten Gehäuse (16) mittels der Höhenverstellvorrichtung (37) vertikal positionierbar und in einer horizontalen Ebene (38) ausrichtbar ist.

4. Tragrollenwechselvorrichtung (18) nach einem der vorhergehenden Ansprüche, **dadurch gekennzeichnet, dass** die Höhenverstellvorrichtung (37) wenigstens ein zur Ausrichtung des Gehäuses (16) in einer horizontalen Ebene (38) dienendes Neigungsmessgerät (39) aufweist.

5. Tragrollenwechselvorrichtung (18) nach einem der Ansprüche 2 bis 4, **dadurch gekennzeichnet, dass** der Trägerrahmen (24) das Gehäuse (16) bewegbar abstützt, so dass das Gehäuse (16) relativ zum Trägerrahmen (24) verschwenkbar abgestützt ist.

6. Tragrollenwechselvorrichtung (18) nach Anspruch 5, **dadurch gekennzeichnet, dass** das Gehäuse (16) mittels Gleitlagerelementen (40), die vorzugsweise aus einem eine Legierung auf Kupferbasis aufweisenden Werkstoff oder aus Polytetrafluorethylen gebildet sind, schwenkbar auf dem Trägerrahmen (24) abgestützt ist.

7. Tragrollenwechselvorrichtung (18) nach Anspruch 5 oder 6, **dadurch gekennzeichnet, dass** die Rückseite (30) des Gehäuses (16) über einen Schwenkantrieb (41) mit dem Trägerrahmen (24) bewegungsgekoppelt verbunden ist, wobei das Gehäuse (16) mittels des Schwenkantriebs (41) um einen an der Vorderseite (22) des Gehäuses (16) angeordneten Schwenkpunkt (44) schwenkbar ist.

8. Tragrollenwechselvorrichtung (18) nach Anspruch 7, **dadurch gekennzeichnet, dass** der Schwenkpunkt (44) vertikal versetzt zur Schleuse (17) des Gehäuses (16) angeordnet ist, wobei der Schwenkpunkt (44) und die Schleuse (17) ortsfest zueinander angeordnet sind.

9. Tragrollenwechselvorrichtung (18) nach Anspruch 7 oder 8, **dadurch gekennzeichnet, dass** der Schwenkpunkt (44) und der Trägerrahmen (24) über einen Verschiebeantrieb (48) bewegungsgekoppelt miteinander verbunden sind, wobei der Schwenkpunkt (44) mittels des Verschiebeantriebs (48) relativ zum Trägerrahmen (24) bewegbar ist.

10. Tragrollenwechselvorrichtung (18) nach einem der vorhergehenden Ansprüche, **dadurch gekennzeichnet, dass** die Höhenverstellvorrichtung (37) wenigstens ein vorderes Hubelement (35) umfasst, das im Bereich der Vorderseite (22) des Gehäuses (16) an dem Trägerrahmen (24) befestigt ist.

11. Tragrollenwechselvorrichtung (18) nach einem der vorhergehenden Ansprüche, **dadurch gekennzeichnet, dass** die Höhenverstellvorrichtung (37) wenigstens ein hinteres Hubelement (36) umfasst, das im Bereich der Rückseite (30) des Gehäuses (16) an dem Trägerrahmen (24) befestigt ist.

12. Anordnung, die einen Rollenherdofen (1) zum Wärmebehandeln von Bauteilen (3) und eine zum Wechseln einer Tragrolle (2) des Rollenherdofens (1) ausgebildete Tragrollenwechselvorrichtung (18) gemäß einem der Ansprüche 1 bis 11 aufweist.

## Claims

1. A support roller exchange device (18) for exchanging a support roller (2) of a roller hearth furnace (1), featuring:
a housing (16), which can be sealed relative to the outer ambient atmosphere and features on its front side (22) a lock (17) that can be coupled to the roller hearth furnace (1), wherein said lock makes it possible to access a support roller (2) of the roller hearth furnace (1) to be dismounted from the interior of the housing (16) under exclusion of the ambient atmosphere, and
at least one support roller handling device (15, 15'), which is designed for dismounting and mounting support rollers (2) and is displaceably arranged in the housing (16), wherein said support roller handling device is designed such that it can be at least partially moved out of the housing (16) through the lock (17),
**characterized in that**
the support roller exchange device (18) furthermore features a height adjusting device (37), which is coupled to the housing (16) and designed for vertically positioning the housing (16) and for additionally aligning the housing (16) in a horizontal plane (38), wherein the horizontal plane may also be a plane that is inclined relative to the horizontal.

2. The support roller exchange device (18) according to claim 1, **characterized in that** the housing (16) is supported on a displaceable carrier frame (24), which can be moved at least toward and away from the roller hearth furnace (1).

3. The support roller exchange device (18) according to claim 2, **characterized in that** the height adjusting device (37) is mounted on the displaceable carrier frame (24) and supports the carrier frame (24) in such a way that the carrier frame (24) can be vertically positioned and aligned in a horizontal plane (38) together with the housing (16) supported thereon by means of the height adjusting device (37).

4. The support roller exchange device (18) according to one of the preceding claims, **characterized in that** the height adjusting device (37) features at least one inclinometer (39) for aligning the housing (16) in a horizontal plane (38).

5. The support roller exchange device (18) according to one of claims 2-4, **characterized in that** the carrier frame (24) supports the housing (16) in a movable fashion such that the housing (16) can be pivoted relative to the carrier frame (24).

6. The support roller exchange device (18) according to claim 5, **characterized in that** the housing (16) is pivotably supported on the carrier frame (24) by means of plain bearing elements (40), which are preferably made of a material containing a copper-based alloy or of polytetrafluoroethylene.

7. The support roller exchange device (18) according to claim 5 or 6, **characterized in that** the rear side (30) of the housing (16) is motion-coupled to the carrier frame (24) by means of a pivot drive (41), wherein the housing (16) can be pivoted about a pivot point (44) arranged on the front side (22) of the housing (16) by means of the pivot drive (41).

8. The support roller exchange device (18) according to claim 7, **characterized in that** the pivot point (44) is arranged vertically offset to the lock (17) of the housing (16), wherein the pivot point (44) and the lock (17) are arranged stationary to one another.

9. The support roller exchange device (18) according to claim 7 or 8, **characterized in that** the pivot point (44) and the carrier frame (24) are motion-coupled by means of a displacement drive (48), wherein the pivot point (44) can be moved relative to the carrier frame (24) by means of the displacement drive (48).

10. The support roller exchange device (18) according to one of the preceding claims, **characterized in that** the height adjusting device (37) comprises at least one front lifting element (35), which is mounted on the carrier frame (24) in the region of the front side (22) of the housing (16).

11. The support roller exchange device (18) according to one of the preceding claims, **characterized in that** the height adjusting device (37) comprises at least one rear lifting element (36), which is mounted on the carrier frame (24) in the region of the rear side (30) of the housing (16).

12. An arrangement comprising a roller hearth furnace (1) for heat-treating components (3) and a support roller exchange device (18) according to one of claims 1-11, which is designed for exchanging a support roller (2) of the roller hearth furnace (1).

## Revendications

1. Dispositif de changement de rouleau porteur (18) pour changer un rouleau porteur (2) d'un four à sole à rouleaux (1), présentant :
un logement (16) pouvant être étanche à l'atmosphère ambiante extérieure qui présente une trémie (17) pouvant être couplée au four à sole à rouleaux sur le devant (22), par laquelle il est possible d'accéder à un rouleau porteur (2) à démonter du four à sole à rouleaux (1) depuis l'intérieur du logement (16) en excluant l'atmosphère ambiante, et
au moins un dispositif de manipulation de rouleau porteur (15, 15') conçu pour le démontage et le montage de rouleaux porteurs (2) qui est disposé mobile dans le logement (16) et qui est conçu escamotable du logement (16) au moins partiellement à travers la trémie (17),
**caractérisé en ce que**
le dispositif de changement de rouleau porteur (18) présente en outre un dispositif de réglage en hauteur (37) couplé au logement (16), qui est conçu pour positionner le logement (16) verticalement et en alignant en outre le logement (16) pour un plan horizontal (38), dans lequel le plan horizontal peut être également un plan incliné par rapport à l'horizontale.

2. Dispositif de changement de rouleau porteur (18) selon la revendication 1, **caractérisé en ce que** le logement (16) est disposé sur un châssis porteur (24) conçu mobile qui peut être déplacé au moins en direction du four à sole à rouleaux (1) et éloigné de celui-ci.

3. Dispositif de changement de rouleau porteur (18) selon la revendication 2, **caractérisé en ce que** le dispositif de réglage en hauteur (37) est fixé sur le châssis porteur (24) conçu mobile et appuie le châssis porteur (24) de telle façon que le châssis porteur (24) peut être positionné verticalement conjointement avec le logement (16) disposé dessus au moyen du dispositif de réglage en hauteur (37) et peut être aligné dans un plan horizontal (38).

4. Dispositif de changement de rouleau porteur (18) selon l'une des revendications précédentes, **caractérisé en ce que** le dispositif de réglage en hauteur (37) présente au moins un appareil de mesure d'inclinaison (39) servant à aligner le logement (16) dans un plan horizontal (38).

5. Dispositif de changement de rouleau porteur (18) selon l'une des revendications 2 à 4, **caractérisé en ce que** le châssis porteur (24) appuie le logement (16) de façon mobile, de sorte que le logement (16) est appuyé en pouvant basculer par rapport au châssis porteur (24).

6. Dispositif de changement de rouleau porteur (18) selon la revendication 5, **caractérisé en ce que** le logement (16) est appuyé en pouvant basculer sur le châssis porteur (24) par des éléments de paliers lisses (40) qui sont conçus de préférence dans un matériau présentant un alliage à base de cuivre ou bien en polytétrafluoroéthylène.

7. Dispositif de changement de rouleau porteur (18) selon la revendication 5 ou 6, **caractérisé en ce que** l'arrière (30) du logement (16) est relié en mouvement couplé avec le châssis porteur (24) par le biais d'un entraînement pivotant (41), dans lequel le logement (16) est pivotant par le biais de l'entraînement pivotant (41) sur un point de pivotement (44) disposé sur le devant (22) du logement (16).

8. Dispositif de changement de rouleau porteur (18) selon la revendication 7, **caractérisé en ce que** le point de pivotement (44) est disposé en étant décalé verticalement par rapport à la trémie (17) du logement (16), dans lequel le point de pivotement (44) et la trémie (17) sont disposés fixement l'un par rapport à l'autre.

9. Dispositif de changement de rouleau porteur (18) selon la revendication 7 ou 8, **caractérisé en ce que** le point de pivotement (44) et le châssis porteur (24) sont couplés entre eux par le biais d'un entraînement coulissant (48), dans lequel le point de pivotement (44) est mobile par rapport au châssis porteur (24) par le biais de l'entraînement coulissant (48).

10. Dispositif de changement de rouleau porteur (18) selon l'une des revendications précédentes, **caractérisé en ce que** le dispositif de réglage en hauteur (37) comprend au moins un élément de levage avant (35) qui est fixé au niveau du devant (22) du logement (16) sur le châssis porteur (24).

11. Dispositif de changement de rouleau porteur (18) selon l'une des revendications précédentes, **caractérisé en ce que** le dispositif de réglage en hauteur (37) comprend au moins un élément de levage arrière (36) qui est fixé au niveau du dos (30) du logement (16) sur le châssis porteur (24).

12. Agencement qui comprend un four à sole à rouleaux (1) pour le traitement thermique de pièces (3) et un dispositif de changement de rouleau porteur (18) conçu pour changer un rouleau porteur (2) du four à sole à rouleaux (1) selon l'une des revendications 1 à 11.
